Europäisches Patentamt

European Patent Office

Office européen des brevets

(19)

(11) Veröffentlichungsnummer : **0 108 293
B1**

(12) **EUROPÄISCHE PATENTSCHRIFT**

(45) Veröffentlichungstag der Patentschrift :
07.05.86

(21) Anmeldenummer : **83110326.2**

(22) Anmeldetag : **17.10.83**

(51) Int. Cl.⁴ : **H 02 H 11/00**

(54) **Schutzschaltungsanordnung für eine Hochspannungsschaltanlage.**

(30) Priorität : **01.11.82 CH 6340/82**

(43) Veröffentlichungstag der Anmeldung :
**16.05.84 Patentblatt 84/20**

(45) Bekanntmachung des Hinweises auf die Patenterteilung : **07.05.86 Patentblatt 86/19**

(84) Benannte Vertragsstaaten :
**CH DE FR LI**

(56) Entgegenhaltungen :
**DE-B- 1 186 938
DE-B- 1 292 716
SIEMENS ZEITSCHRIFT, Band 49, Nr. 4, 1975, Seiten
250-253, Erlangen, DE, G. BONIN et al.: "Schaltfehlerschutzgeräte 8TJ2 in Bausteintechnik"**

(73) Patentinhaber : **BBC Aktiengesellschaft Brown,
Boveri & Cie.
Haselstrasse
CH-5401 Baden (CH)**

(72) Erfinder : **Herzig, Peter
Stritengässli 24
CH-5000 Aarau (CH)**

**Beschreibung**

Die Erfindung betrifft eine Schutzschaltungsanordnung gemäss dem ersten Teil von Patentanspruch 1.

Bei Hochspannungsschaltanlagen mit unabhängig voneinander betätigbaren Schaltern, wie Leistungs-, Trenn- und Erdungsschaltern, ist es üblich, zur Vermeidung unerwünschter elektrischer Betriebszustände die Zustände dieser Schalter zu melden und die Meldesignale einer Gruppe von Schaltern zur Ueberwachung des Zustandes eines ausserhalb dieser Gruppe befindlichen Schalters zu verwenden.

Hierbei werden die Meldesignale von Meldekontakten abgegeben. Die Kontakte einer Gruppe von Schaltern der Schaltanlage, welche das Schalten eines weiteren Schalters der Anlage beeinflussen, sind hierbei in einer logischen Schaltung miteinander verknüpft in einem Schaltbefehlskreis des weiteren Schalters der Anlage angeordnet. Hierdurch wird erreicht, dass ein Schaltbefehl nur dann wirksam werden kann, wenn gefahrloses Schalten möglich ist. So lässt es sich beispielsweise bei einer Schaltanlage mit einem zwischen einer Sammelschiene und einem Leistungsschalter angeordneten Trennschalter, einem dem Leistungsschalter nachgeschalteten Abgangstrennschalter sowie zwei mit den Verbindungspunkten von Leistungs- und jedem der Trennschalter verbundenen Erdungsschaltern erreichen, dass beispielsweise jeder der Erdungsschalter nur dann betätigt werden kann, wenn die beiden Trennschalter geöffnet sind. Dies bedingt, dass im Schaltbefehlskreis jedes Erdungsschalters die Meldekontakte der beiden Trennschalter in einer Serienschaltung miteinander verknüpft vorgesehen sein müssen. Da bei einer Schaltanlage die Betätigbarkeit eines Schalters im allgemeinen von den Schaltpositionen von bis zu 5 weiteren Schaltern der Anlage abhängt, werden pro Schalter etwa 3 bis 5 Hilfskontakte benötigt, bei einem dreipolig ausgeführten Schalter entsprechend 9 bis 15. Jeder dieser Kontakte muss mittels zweier Adern potentialfrei und abgeschirmt in einer Steuertafel verkabelt werden. Dies bedingt nicht nur erhebliche Material- und Montagekosten, sondern wegen der Schwierigkeit Schaltfehlerschutzsysteme von Hochspannungsschaltanlagen zu standardisieren und zu modularisieren auch ganz erhebliche anlagen-individuelle Engineeringskosten, welche vor allem bei der Ausarbeitung sowie spezieller Stromlaufpläne entstehen.

Eine Schutzschaltungsanordnung der gattungsgemässen Art ist aus der Siemens-Zeitschrift 49 (1975) Heft 4, S. 250-553, bekannt. Bei der bekannten Anordnung können alle im Schaltanlagenbau vorkommenden Abzweigkombinationen mit drei Bausteintypen zusammengestellt werden, von denen ein erster für Trenn- und Erdungsschalter, ein zweiter für Leistungsschalter und ein dritter für übergeordnete Aufgaben einer Abzweigkombination vorgesehen ist. Die Bausteine enthalten die zum Betätigen der Schalter erforderlichen Steuerelemente sowie Hilfskontakte für den Schaltfehlerschutz. Eine solche Schutzschaltungsanordnung ist vergleichsweise aufwendig, da die Steuerelemente spezielle Hilfsschalter enthalten und da eine grosse Anzahl an Hilfskontakten benötigt wird.

Die Erfindung wie sie im Patentanspruch 1 gekennzeichnet ist, löst die Aufgabe, eine Schutzschaltungsanordnung für Hochspannungsschaltanlagen mit einer geringen Anzahl an Meldekontakten anzugeben, welche zugleich mit nur einem einzigen Typ von Freigabeeinheiten standardisierbar ist.

Die Schutzschaltungsanordnung nach der Erfindung zeichnet sich dadurch aus, dass allen Schaltern der Hochspannungsschaltanlage unabhängig von deren Typ und ohne deren Funktion zu verändern jeweils lediglich eine Freigebeeinheit gleichen Typs vorgeschaltet ist, und dass sie leicht programmierbar ist, da eine einzige leitende Verbindung zur Realisierung einer bestimmten Verknüpfungsbedingung zwischen zwei Schaltern der Schaltanlage genügt und diese leitende Verbindung darüber hinaus im Bedarfsfall auch noch am Montageort der Schaltanlage durch Stecken oder Schrauben geändert werden kann. Ferner werden pro Schalterpol lediglich zwei Meldekontakte benötigt, nämlich einer für die Ein- und einer für die Ausschaltposition.

Vorteilhafte Weiterbildungen der Erfindung sind in den abhängigen Patentansprüchen angegeben. Hervorzuheben sind hierbei insbesondere die gemäss den Patentansprüchen 6 bis 8 weitergebildeten Schutzschaltungsanordnungen, welche sich durch eine besonders hohe Sicherheit auszeichnen, da alle beteiligten Freigabeschalter unmittelbar vor jeder Schalthandlung auf einwandfreie Funktion geprüft werden und zwar hinsichtlich eines einwandfreien Anzuges (Drahtunterbrechung) als auch hinsichtlich eines einwandfreien Abfalls (Klemmen, Kleben von Kontakten). Eine etwaige Störung eines Freigabeschalters führt zu einer Befehlsblockierung, so dass keinerlei Schaden daraus erwachsen kann. Es werden ferner keine beständig angezogenen Freigabeschalter verwendet und werden somit eine Erwärmung und Alterung der Freigabeschalter sowie ein unnötiger Stromverbrauch vermieden. Daher lassen sich als Freigabeschalter ohne weiteres Schütze einsetzen, deren Verwendung sich in der Praxis bisher wegen des bei jeder technischen Einrichtung gegebenen Risikos von Funktionsstörungen bzw. wegen des hohen Aufwandes nicht durchsetzen konnte. Diese Schütze werden unmittelbar bei der Befehlseingabe kontrolliert, ob sie alle abgefallen sind, und nur dann erfolgt das für die Freigabe der Schalthandlung notwendige und unmittelbar nachfolgende Anziehen aller Schütze. Hierdurch wird eine 100 %-ige Sicherheit und Zuverlässigkeit erreicht.

Eine insbesondere bei grossen Stückzahlen preiswert zu realisierende Ausführungsform der erfindungsgemässen Schutzschaltungsanordnung lässt sich durch eine Ausgestaltung gemäss den Merkmalen von Patentanspruch 9 erreichen.

2

In der Zeichnung sind nachfolgend Ausführungsbeispiele der erfindungsgemässen Schutzschaltungsanordnung in vereinfachter Form wiedergegeben.

Hierbei zeigt :

Figur 1 ein Elektroschema eines Teils einer bekannten Hochspannungsschaltanlage ;

Figur 2 eine erfindungsgemässe Schutzschaltungsanordnung für die Hochspannungsschaltanlage gemäss Fig. 1, bei der der Eingang einer modularisierten Freigabeeinheit eines der Hochspannungsschalter mit den Ausgängen von modularisierten Freigabeeinheiten vier weiterer Hochspannungsschalter dieser Anlage verbunden ist,

Figur 3 eine detaillierte Darstellung einer ersten Ausführungsform einer Freigabeeinheit der erfindungsgemässen Schutzschaltungsanordnung nach Fig. 2, und

Figur 4 eine detaillierte Darstellung einer zweiten Ausführungsform einer Freigabeeinheit einer erfindungsgemässen Schutzschaltungsanordnung, bei der das Schalten eines Hochspannungsschalters von speziellen Verriegelungsbedingungen von 5 weiteren Schaltern einer Hochspannungsschaltanlage abhängt.

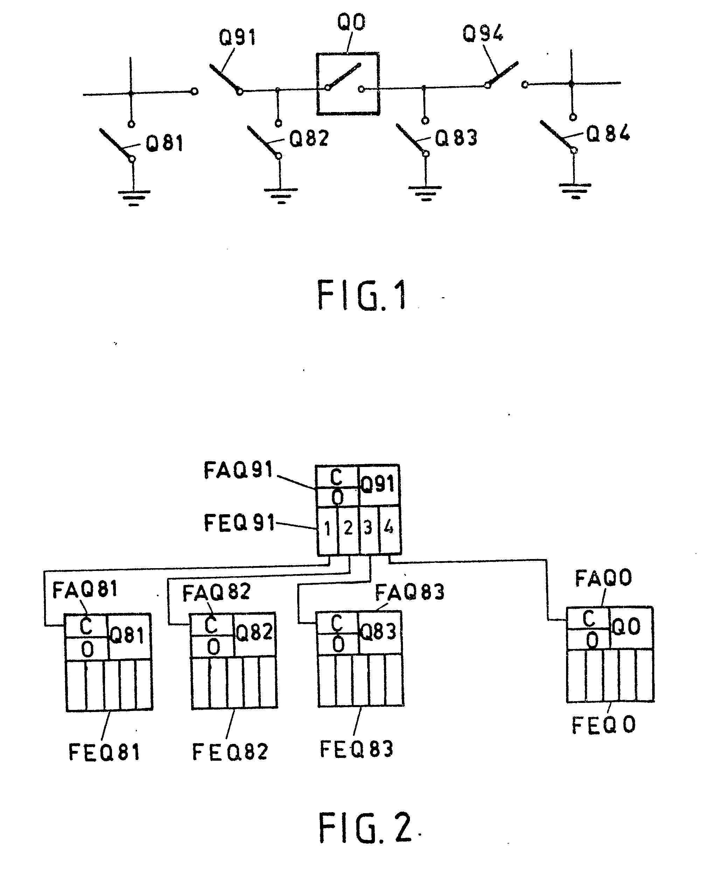

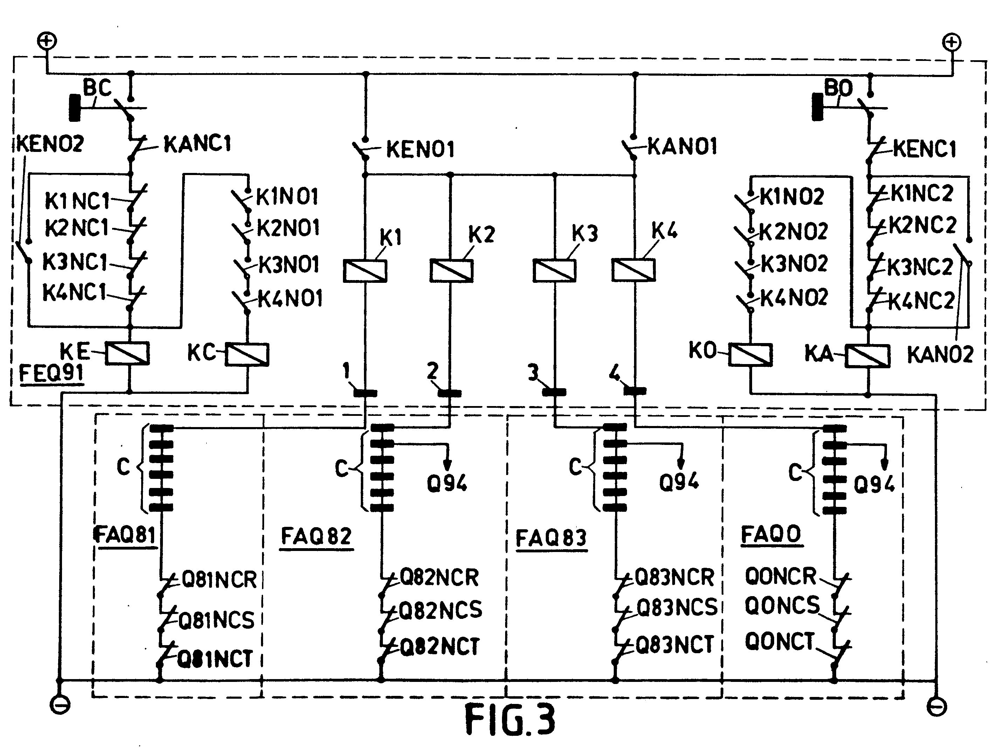

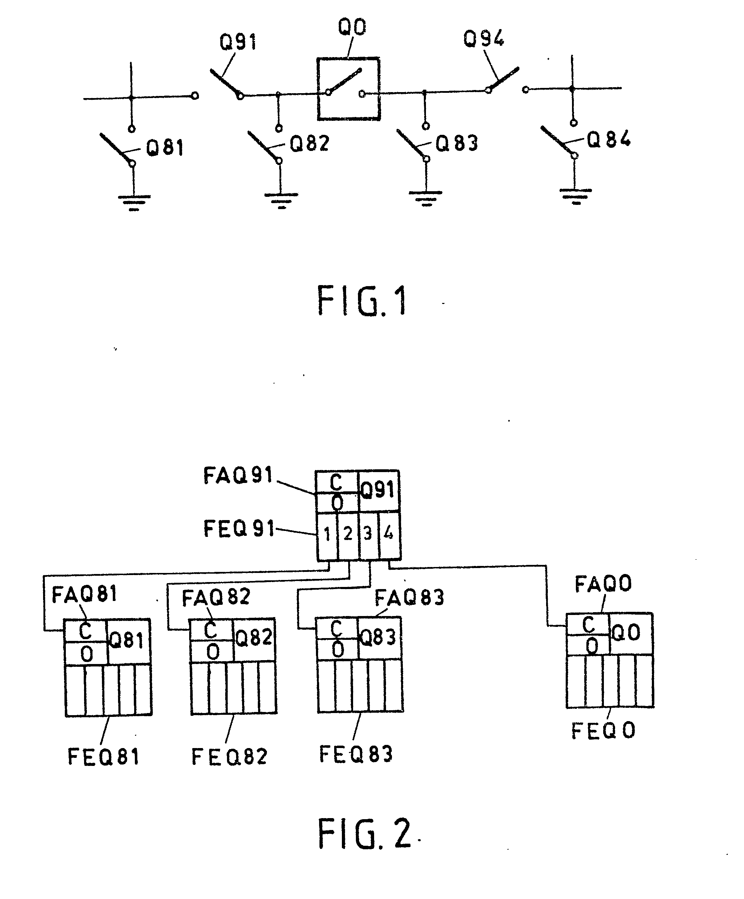

In allen Figuren sind gleiche Teile mit gleichen Bezugszeichen versehen. In Fig. 1 ist ein Elektroschema eines Teils einer Hochspannungsschaltanlage mit einem zwischen zwei Trennschaltern Q91 und Q94 angeordneten Leistungsschalter Q0 dargestellt. Die beiden Verbindungspunkte zwischen dem Leistungsschalter Q0 und jedem der Trennschalter Q91 und Q94 sind über Erdungsschalter Q82 und Q83, die vom Leistungsschalter Q0 abgewandten Kontakte der Trennschalter über Erdungsschalter Q81 und Q84 auf Erdpotential bringbar. Bei einer solchen Hochspannungsschaltanlage darf beispielsweise der Trennschalter Q91 nur dann betätigt werden, wenn der Leistungsschalter Q0 und die Erdungsschalter Q81, Q82 und Q83 offen sind, was sich in Boolescher Schreibweise wie folgt darstellen lässt :

$$Q91 \; CO \; \overline{Q81} \; \wedge \; \overline{Q82} \; \wedge \; \overline{Q83} \; \wedge \; \overline{Q0}$$

In Fig. 2 ist nun eine Schutzschaltungsanordnung nach der Erfindung dargestellt, welche die vorstehenden Bedingungen erfüllt. Bei dieser Anordnung sind dem zu betätigenden Trennschalter Q91 eine modulisierte Freigabeeinheit mit einem Eingangsteil FEQ91 und einem Ausgangsteil FAQ91 und den die Betätigung dieses Trennschalters kontrollierenden Erdungs- und Leistungsschaltern Q81, Q82, Q83, Q0 modularisierte Freigabeeinheiten mit Eingangsteilen FEQ81, FEQ82, FEQ83, FEQ0 und Ausgangsteilen FAQ81, FAQ82, FAQ83 und FAQ0 zugeordnet. Eingänge 1, 2, 3, 4 des Eingangsteils FEQ91 der Freigabeeinheit des Trennschalters Q91 sind mit Ausgängen C der Ausgangsteile FAQ81, FAQ82, FAQ83 und FAQ0 der Freigabeeinheiten der Erdungsschalter Q81, Q82 und Q83 sowie des Leistungsschalters Q0 verbunden. An den Ausgängen C ist dann ein Meldesignal von einem nicht dargestellten Stellungsmeldekontakt des betreffenden Schalters abgreifbar, wenn dieser Schalter eingeschaltet ist, wohingegen an Ausgängen O dann ein Meldesignal abgreifbar ist, wenn der betreffende Schalter ausgeschaltet ist.

Um nun die vorstehend aufgeführte Bedingung für die Betätigbarkeit des Trennschalters Q91 zu erfüllen, sind alle Ausgänge C der Freigabeeinheiten der kontrollierenden Erdungsschalter Q81, Q82, Q83 und des Leistungsschalters Q0 an die Eingänge 1, 2, 3, 4 der Freigabeeinheit des kontrollierten Trennschalters Q91 gelegt. Hierdurch ist in einfacher Weise sichergestellt, dass nur die den Einschaltzustand der kontrollierenden Erdungsschalter Q81, Q82, Q83 und des Leistungsschalters Q0 meldenden Signale in die Freigabeeinheit des kontrollierten Trennschalters Q91 gelangen, wo sie in logischer Weise miteinander verknüpft den nicht dargestellten Befehlsweg des Betätigungsmechanismus dieses Schalters freigeben.

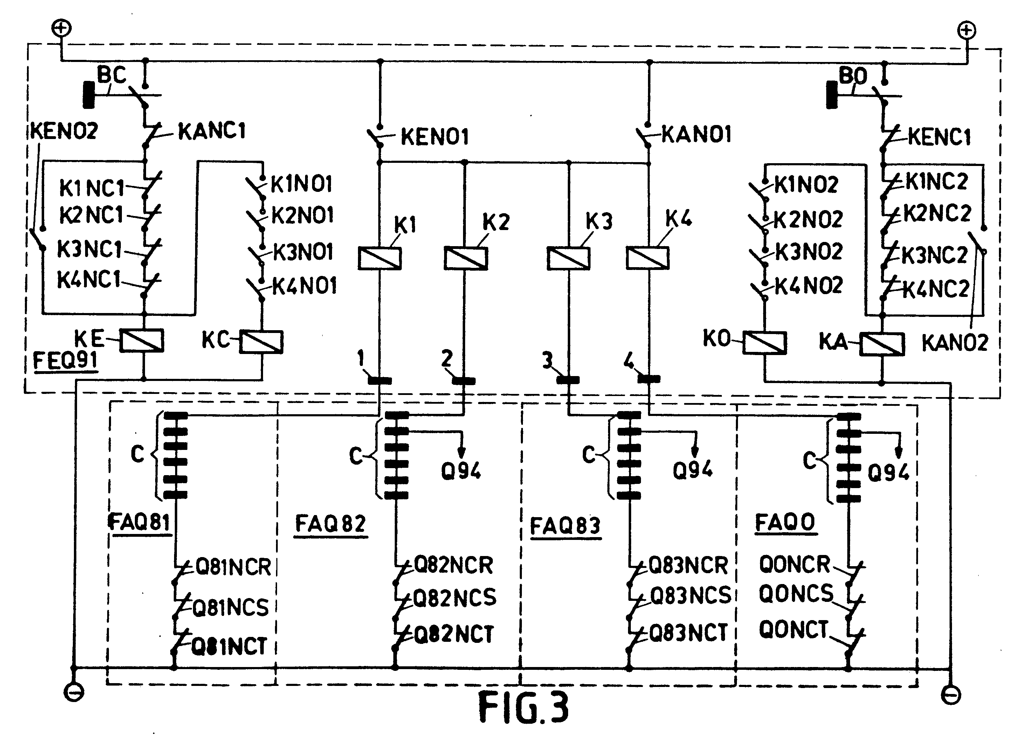

In Fig. 3 ist eine Freigabeeinheit der vorstehend erläuterten Schutzschaltungsanordnung genauer beschrieben. Die dem Trennschalter Q91 zugeordnete Freigabeeinheit enthält in ihrem strichliert begrenzten Eingangsteil FEQ91 als Schütze ausgebildete Freigabeschalter, deren als Magnetspulen ausgebildete Erregerorgane mit K1, K2, K3 und K4 bezeichnet sind. Jeder dieser Freigabeschalter weist jeweils 2 vom gleichen Erregerorgan betätigte Oeffner- und Schliesserkontakte auf. Das Erregerorgan K1 weist beispielsweise die Oeffnerkontakte K1NC1 und K1NC2 sowie die Schliesserkontakte K1NO1 und K1NO2 auf. Entsprechend weisen Erregerorgane die K2 bzw. K3 bzw. K4 die Oeffnerkontakte K2NC1 und K2NC2 bzw. K3NC1 und K3NC2 bzw. K4NC1 und K4NC2 und Schliesserkontakte K2NO1 und K2NO2 bzw. K3NO1 und K3NO2 bzw. K4NO1 und K4NO2 auf. Darüber hinaus sind im Eingangsteil FEQ91 zwei ebenfalls als Schütze ausgebildete Kontrollschalter mit Erregerorganen KE und KA vorgesehen. Jeder dieser Kontrollschalter enthält drei Kontakte, nämlich zwei Schliesserkontakte und einen Oeffnerkontakt. Das Erregerorgan KE enthält die Schliesserkontakte KENO1 und KENO2 und den Oeffnerkontakt KENC1, das Erregerorgan KA enthält die Schliesserkontakte KANO1 und KANO2 und den Oeffnerkontakt KANC1. Ferner sind im Eingangsteil FEQ91 noch ein den Einschaltbefehl übermittelnder Betätigungsschalter BC und ein den Schliessvorgang der Kontakte des Trennschalters Q91 einleitendes Relais mit einem Erregerorgan KC sowie ein den Ausschaltbefehl übermittelnder Betätigungsschalter BO und ein den Oeffnungsvorgang der Kontakte des Trennschalters Q91 direkt auslösendes Relais mit einem Erregerorgan KO vorgesehen. Betätigungsschalter BC, Oeffnerkontakt KANC1 des Erregerorgans KA, Schliesserkontakt KENO2 des Erregerorgans KE, Schliesserkontakt K1NO1, K2NO1, K3NO1, und K4NO1 der Erregerorgane K1, K2, K3 und K4 sowie Erregerorgan KC des den Schliessvorgang der Kontakte des Trennschalters Q91 auslösenden Relais sind in Serie zwischen die Pole einer Gleichspannungsquelle

3

# 0 108 293

geschaltet und bilden den Einschaltbefehlskreis des Trennschalters Q91. Betätigungsschalter BO, Oeffnerkontakt KENC1 des Erregerorgans KE, Schliesserkontakte KANO2 des Erregerorgans KA, Schliesserkontakte K1NO2, K2NO2, K3NO2 und K4NO2 der Erregerorgane K1, K2, K3 und K4 sowie Erregerorgan K0 des den Oeffnungsvorgang der Kontakte des Trennschalters Q91 einleitenden Relais sind in Serie zwischen den Polen der Gleichspannungsquelle angeordnet und bilden den Ausschaltbefehlskreis des Trennschalters Q91.

Im Einschaltbefehlskreis ist parallel zum Schliesserkontakt KENO2 eine Serienschaltung der Oeffnerkontakte K1NC1, K2NC1, K3NC1 und K4NC1 und parallel zu den Schliesserkontakten K1NO1, K2NO1, K3NO1, K4NO1 und dem Erregerorgan KC das Erregerorgan KE eines der beiden Kontrollschalter angeordnet. Entsprechend ist im Ausschaltbefehlskreis parallel zum Schliesserkontakt KANO2 eine Serienschaltung der Oeffnerkontakte K1NC2, K2NC2, K3NC2 und K4NC2 und parallel zu den Schliesserkontakten K1NO2, K2NO2, K3NO2, K4NO2 und dem Erregerorgan K0 das Erregerorgan KA des anderen der beiden Kontrollschalter angeordnet.

Die Erregerorgane K1, K2, K3 und K4 der Freigabeschalter sind einerseits der Reihe nach mit Eingängen 1, 2, 3 und 4 des Eingangsteils FEQ91 der Freigabeeinheit des Trennschalters Q91 verbunden und andererseits über die Schliesserkontakte KENO1 und KANO1 der Erregerorgane KE und KA mit dem Pluspol der Gleichspannungsquelle.

Die strichliert umrandeten Ausgangsteile FAQ81, FAQ82, FAQ83 und FAQ0 der Freigabeeinheiten der Erdungsschalter Q81 bzw. Q82 bzw. Q83 und des Leistungsschalters Q0 weisen jeweils drei (den Phasen R, S und T zugeordnete) mit dem Minuspol der Gleichspannungsquelle verbundene, in Serie geschaltete und als Oeffnerkontakte ausgebildete Stellungsmeldekontakte Q81NCR, Q81NCS, Q81NCT bzw. Q82NCR, Q82NCS, Q82NCT bzw. Q83NCR, Q83NCS, Q83NCT und Q0NCR, Q0NCS, Q0NCT auf. Diese Serienschaltungen sind jeweils mit Ausgängen C der Ausgangsteile verbunden. Die Ausgänge C der Ausgangsteile FAQ81, FAQ82, FAQ83 und FAQ0 sind der Reihe nach mit Eingängen 1, 2, 3 und 4 des Eingangsteils FEQ91 der Freigabeeinheit des Trennschalters Q91 verbunden.

Jedes Ausgangsteil enthält darüber hinaus aber auch noch eine Serienschaltung von jeweils drei mit dem Minuspol der Gleichspannungsquelle verbundenen und als Schliesserkontakte ausgebildeten Stellungsmeldekontakten, welche jeweils mit Ausgängen C der Ausgangsteile verbunden sind. Diese Kontakte sind jedoch aus Gründen der Uebersichtlichkeit nicht dargestellt und sind darüber hinaus bei der Erläuterung des Ausführungsbeispiels funktionell ohne Bedeutung, da die kontrollierenden Erdungsschalter Q81, Q82, Q83 und der Leistungsschalter Q0 lediglich in Einschaltstellung, also bei geschlossenen Stellungsmeldekontakten, Meldesignale abgeben.

Die Ausgänge C der Ausgangsteile sind darüber hinaus aber auch mit anderen Freigabeeinheiten verbunden. So etwa die Ausgänge der Ausgangsteile FAQ82, FAQ83 und FAQ0 mit der Freigabeeinheit des Trennschalters Q94.

Die Wirkung dieser Anordnung ist nun wie folgt :

Ein Einschaltbefehl muss die Oeffnerkontakte KANC1 sowie K1NC1, K2NC1, K3NC1 und K4NC1 passieren, um das Erregerorgan KE des einen Kontrollschalters anregen zu können. Falls das Erregerorgan KE klemmen sollte, dann bleibt der Gegenbefehl gesperrt, was eine Störungsbehebung erzwingt. Falls eines der Erregerorgane K1, K2, K3 und K4 klemmen sollte, bleibt die Einschaltbefehlsleitung wegen eines geöffneten Oeffnerkontaktes offen. Sind der Kontrollschalter und die 4 Freigabeschalter abgefallen, so wird das als Spule ausgebildete Erregerorgan KE erregt und der betreffende Kontrollschalter geht auf den Einschaltbefehl in Selbsthaltung, was bedeutet, dass der Oeffnerkontakt KENC1 geöffnet (Ausschaltbefehlskreis unterbrechen) und die Schliesserkontakte KENO1 und KENO2 geschlossen sind. Wegen des geschlossenen Kontaktes KENO1 sind nun alle Erregerorgane K1, K2, K3 und K4 der Freigabeschalter mit dem Pluspol der Gleichspannungsquelle verbunden.

Von diesen Erregerorganen K1, K2, K3 und K4 sind nur diejenigen auch mit dem Minuspol der Gleichspannungsquelle verbunden, welche mit dem Freigabeausgang eines der Schalter Q81, Q82, Q83 und Q0 verbunden sind, dessen Stellungsmeldekontakte beispielsweise Q81NCR, Q81NCS, Q81NCT sich für alle drei Phasen R, S und T in der geforderten Schaltstellung befinden. Beim Ausführungsbeispiel bedeutet dies, dass die Erregerorgane K1, K2, K3 und K4 dann erregt werden, wenn die Erdungsschalter Q81, Q82, Q83 und der Leistungsschalter Q0 und damit auch alle Stellungsmeldekontakte Q81NCR, Q81NCS, Q81NCT, Q82NCR, Q82NCS, Q82NCT, Q83NCR, Q83NCS, Q83NCT, Q0NCR, Q0NCS und Q0NCT geschlossen sind.

Die Schliesserkontakte K1NO1, K2NO1, K3NO1 und K4NO1 der Freigabeschalter werden geschlossen, die Oeffnerkontakte K1NC1, K2NC1, K3NC1 und K4NC1 hingegen geöffnet und der Einschaltbefehl gelangt über den Oeffnerkontakt KANC1 und die Schliesserkontakte KENO2, K1NO1, K2NO1, K3NO1 und K4NO1 zum Erregerorgan KC des die Einschaltung des Trennschalters Q91 veranlassenden Auslöserelais.

Ist eine einzige Freigabebedingung an einem der Erdungsschalter Q81, Q82, Q83 und des Leistungsschalters Q0 nicht erfüllt oder sind nicht alle drei in Serie geschalteten Stellungsmeldekontakte der drei durch den betreffenden Schalter zu schaltenden Phasen in der verlangten und gleichen Stellung, so bleibt der entsprechende Freigabeschalter abgefallen und die Weiterleitung des Einschaltbefehls an das Erregerorgan KC ist unterbunden. Der Trennschalter Q91 bleibt dann verriegelt.

4

Entsprechend ist die Wirkungsweise der Anordnung, wenn durch Schalten des Betätigungsschalters BO ein Ausschaltebefehl erteilt wird.

Beim vorstehend beschriebenen Ausführungsbeispiel ist das Ein- und Ausschalten des Trennschalters Q91 nur in Abhängigkeit von speziellen Verriegelungsbedingungen von 3 Erdungsschaltern Q81, Q82, Q83 und einem Leistungsschalter Q0 einer Hochspannungsschaltanlage beschrieben worden. Durch andere Schaltungen der Schliesserkontakte K1NO1, K2NO1, K3NO1 und K4NO1 bzw. K1NO2, K2NO2, K3NO2 und K4NO2 der Freigabeschalter im Ein- bzw. Ausschaltbefehlskreis lassen sich alle nur denkbaren anderen Verriegelungsbedingungen realisieren. Darüber hinaus können je nach Anzahl der kontrollierten Schalter mehr oder auch weniger als vier Freigabeschalter in der Freigabeeinheit des kontrollierten Schalters vorgesehen sein. Die Freigabe- und Kontrollschalter sind vorzugsweise als Schütze ausgeführt. Bei grossen Serien ist es empfehlenswert, die Freigabeeinheiten als Print-Vorschaltmodule zu gestalten. Dies kann unabhängig vom Typ des zugeordneten Hochspannungsschalters erfolgen.

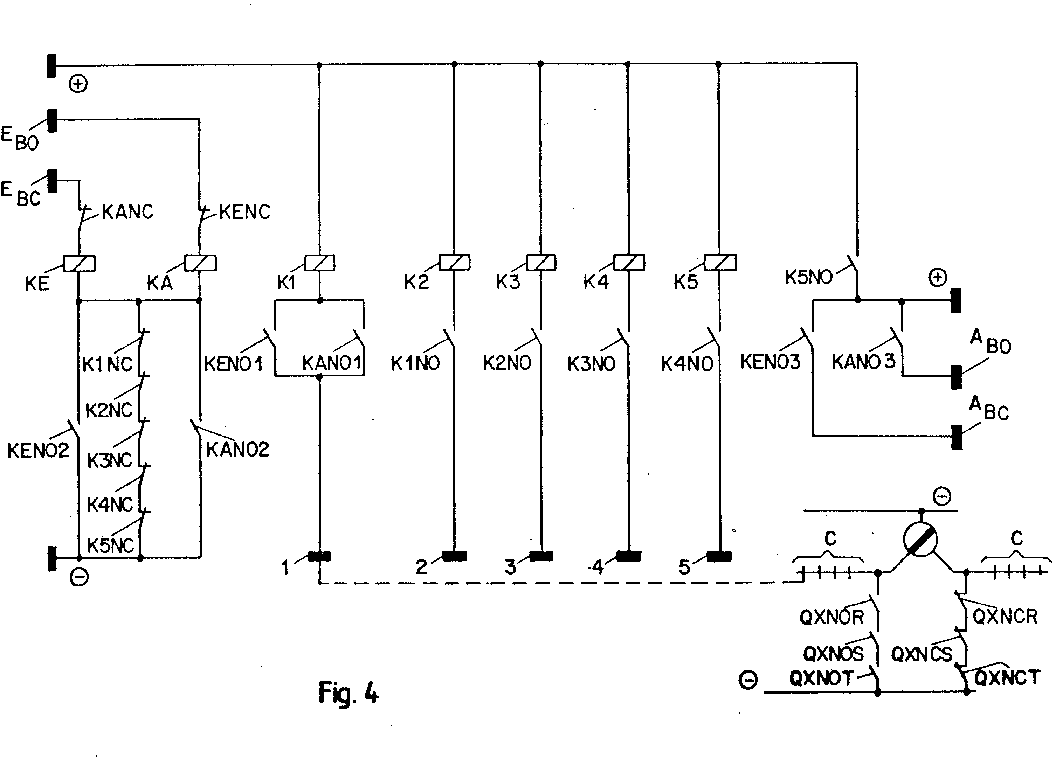

In Fig. 4 ist eine zweite Ausführungsform einer Freigabeeinheit einer erfindungsgemässen Schutzschaltungsanordnung angegeben, bei welcher das Ein- und Ausschalten eines nicht dargestellten Schalters in Abhängigkeit von 5 weiteren Schaltern erfolgt, von denen nur der Freigabeausgang des Schalters QX ersichtlich ist. Bei dieser Ausführungsform bezeichnen $E_{BC}$ und $E_{BO}$ bzw. $A_{BC}$ bzw. $A_{BO}$ die Ein- bzw. die Ausgänge für den Ein- und den Ausschaltbefehl. Die Eingänge $E_{BC}$ bzw. $E_{BO}$ sind mit einem den Ein- bzw. einem den Ausschaltbefehl übermittelnden, nicht dargestellten Betätigungsschalter BC bzw. BO verbindbar, wohingegen die Ausgänge $A_{BC}$ bzw. $A_{BO}$ mit einem nicht dargestellten Auslöseorgan KE zum Einschalten bzw. einem nicht dargestellten Auslöseorgan KA zum Ausschalten des besagten Schalters verbindbar sind.

Die Freigabeeinheit enthält 5 als Schütze ausgebildete Freigabeschalter, deren als Magnetspulen ausgebildete Erregerorgane mit K1, K2, K3, K4 und K5 bezeichnet sind. Jeder dieser Freigabeschalter weist je einen vom gleichen Erregerorgan betätigten Schliesser- und Oeffnerkontakt auf. Der Schalter mit dem Erregerorgan K1 weist den Schliesserkontakt K1NO und den Oeffnerkontakt K1NC auf, entsprechend weist der Schalter mit dem Erregerorgan K2 den Schliesserkontakt K2NO und den Oeffnerkontakt K2NC auf, mit dem Errgerorgan K3 den Schliesserkontakt K3NO und den Oeffnerkontakt K3NC, mit dem Erregerorgan K4 den Schliesserkontakt K4NO und den Oeffnerkontakt K4NC und mit dem Erregerorgan K5 den Schliesserkontakt K5NO und den Oeffnerkontakt K5NC. Darüber hinaus sind zwei ebenfalls als Schütze ausgebildete Kontrollschalter mit Erregerorganen KE und KA vorgesehen. Jeder dieser Kontrollschalter enthält 4 Kontakte, nämlich drei Schliesserkontakte und einen Oeffnerkontakt, welche ebenfalls vom gleichen Erregerorgan betätigt werden. Der Schalter mit dem Erregerorgan KE dient als Einschaltkontrollschalter und weist die drei Schliesserkontakte KENO1, KENO2 und KENO3 sowie den Oeffnerkontakt KENC auf. Der Schalter mit dem Erregerorgan KA dient als Ausschaltkontrollschalter und weist die Schliesserkontakte KANO1, KANO2 und KANO3 sowie den Oeffnerkontakt KANC auf.

Die Eingänge $E_{BC}$ bzw. $E_{BO}$ sind je für sich über eine Serienschaltung von Oeffnerkontakt KANC und Erregerorgan KE bzw. Oeffnerkontakt KENC und Erregerorgan KA an einen gemeinsamen Verbindungspunkt geführt, welcher über drei parallel zueinander geführte und der Reihe nach den Schliesserkontakt KENO2 bzw. den Schliesserkontakt KANO2 bzw. eine Serienschaltung der Oeffnerkontakte K1NC, K2NC, K3NC, K4NC und K5NC enthaltende Stromzweige mit Minuspotential verbindbar ist.

Ein nicht bezeichneter Eingang für Pluspotential ist über den Schliesserkontakt K5NO mit einem Verbindungspunkt verbindbar, welcher seinerseits über einen von drei Stromzweigen unmittelbar mit einem nicht bezeichneten Ausgang für Pluspotential verbunden ist, bzw. über den Schliesserkontakt KENO3 mit dem Ausgang $A_{BC}$ für das Einschaltsignal bzw. über den Schliesserkontakt KANO3 mit dem Ausgang $A_{BO}$ für das Ausschaltsignal. Alle Erregerorgane K1, K2, K3, K4 bzw. K5 der Freigabeschalter sind einerseits mit Pluspotential verbunden und sind andererseits der Reihe nach über die parallelgeschalteten Schliesserkontakte KENO1 und KANO1, den Schliesserkontakt K1NO, den Schliesserkontakt K2NO, den Schliesserkontakt K3NO bzw. den Schliesserkontakt K4NO mit Freigabeeingängen 1, 2, 3, 4 bzw. 5 verbindbar. An den Freigabeeingängen liegt jeweils ein Meldesignal von fünf logisch miteinander zu verknüpfenden Meldesignalen an, welche Meldesignale von Freigabeausgängen C von fünf Hochspannungsschaltern der Schaltanlage abgegeben werden.

In der Figur ist aus Gründen der Uebersichtlichkeit lediglich der Freigabeeingang 1 der Freigabeeinheit mit einem Freigabeausgang C eines Schalters QX verbunden, dessen Stellung über Stellungsmeldekontakte gemeldet wird, welche im Einschaltzustand die Oeffnerkontakte QXNCR, QXNCS, QXNCT und im Ausschaltzustand die Schliesserkontakte QXNOR, QXNOS, QXNOT sein können.

Die Wirkungsweise der Anordnung ist wie folgt :

Bei einem Einschaltbefehl wird der Eingang $E_{BC}$ über einen nicht dargestellten Schalter BC mit Phasenpotential verbunden. Eine Erregung des Erregerorgans KE eines der beiden Kontrollschalter findet statt, wenn die Oeffnerkontakte KANC, K1NC, K2NC, K3NC, K4NC und K5NC geschlossen sind. Dies ist nur dann der Fall, wenn am Schalter kein Gegenbefehl anliegt und der Kontrollschalter mit dem Erregerorgan KA abgefallen ist und wenn zudem auch alle Freigabeschalter abgefallen sind. Der Kontrollschalter mit dem Erregerorgan KE kann nun anziehen und seine drei Schliesserkontakte KENO1, KENO2 und KENO3 schliessen.

Ist der Schliesserkontakt KENO1 geschlossen, so kann das Erregerorgan K1 eines ersten der Freigabeschalter unter der Voraussetzung erregt werden, dass am Freigabeeingang 1 der Freigabeeinheit das für den Einschaltvorgang erforderliche Meldesignal des Hochspannungsschalters QX anliegt. Ist dies der Fall, so öffnet K1NC und schliesst K1NO.

Nach dem Oeffnen des Oeffnerkontakts K1NC wird der durch das Erregerorgan KE des einen Kontrollschalters fliessende Strom nun ausschliesslich über den Stromzweig mit dem geschlossenen Schliesserkontakt KENO2 geführt, während das Schliessen des Schliesserkontakts K1NO einen Stromfluss durch das Erregerorgan K2 eines zweiten der Freigabeschalter bewirkt, sofern am Freigabeeingang 2 das erforderliche Meldesignal von einem weiteren Hochspannungsschalter anliegt.

Entsprechendes gilt auch für die Erregerorgane K3, K4 und K5 der verbleibenden Freigabeschalter, welche nach sukzessiver Prüfung der Freigabebedingungen stufenweise erregt werden. Nach Erregung des Erregerorgans K5 wird der Schliesserkontakt K5NO geschlossen, was zur Folge hat, dass am Ausgang $A_{BC}$ Pluspotential anliegt, wodurch das nicht dargestellte Auslöseorgan des einzuschaltenden Hochspannungsschalters betätigt werden kann.

Entsprechend ist die Wirkungsweise der Anordnung beim Ausschalten.

Gegenüber der in Fig. 3 dargestellten weist die soeben beschriebene Anordnung zusätzlich die Vorteile auf,
— dass die Anzahl der von den Freigabeschaltern (Schützen) benötigten Kontakte halbiert ist, und
— dass der Verdrahtungsaufwand verringert ist.

**Patentansprüche**

1. Schutzschaltungsanordnung für eine Hochspannungsschaltanlage, deren Hochspannungsschaltern (z. B. Q91) jeweils eine modularisierbare Freigabeeinheit zugeordnet ist, welche die Schaltstellung des zugeordneten Hochspannungsschalters (z. B. Q91) meldende Stellungsmeldekontakte aufweist und nach logischer Verknüpfung der von den Stellungsmeldekontakten (z. B. Q81NCR, Q82NCR, Q83NCR, Q0NCR) weiterer Hochspannungsschalter (z. B. Q81, Q82, Q83, Q0) der Anlage abgegebener Meldesignale eine Betätigung dieses Hochspannungsschalters (Q91) ermöglicht, dadurch gekennzeichnet, dass die Freigabeeinheit Freigabeschalter mit jeweils mindestens einem Erregerorgan (z. B. K1) und jeweils mindestens einem diesem Erregerorgan zugeordneten Schliesserkontakt (z. B. K1NO1 bzw. K1NO) aufweist, dass das mindestens eine Erregerorgan (z. B. K1) jedes Freigabeschalters mit einem Eingang (z. B. 1) der Freigabeeinheit verbindbar ist, an welchem Eingang (z. B. 1) ein diesem Freigabeschalter zugeordnetes Signal der logisch miteinander zu verknüpfenden Meldesignale anliegt, und dass die Schliesserkontakte (z. B. K1NO1 bzw. K1NO) der Freigabeschalter in einer die logische Verknüpfung durchführenden Schaltung angeordnet sind.

2. Schutzschaltungsanordnung nach Patentanspruch 1, dadurch gekennzeichnet, dass der Schliesserkontakt (z. B. K1NO1 bzw. K5NO) mindestens eines ersten der Freigabeschalter in einem Befehlsweg zur Aktivierung eines Auslöseorgans (z. B. KC) des zu betätigenden Hochspannungsschalters (z. B. Q91) der Anlage angeordnet ist.

3. Schutzschaltungsanordnung nach Patentanspruch 2, dadurch gekennzeichnet, dass die Schliesserkontakte (z. B. K1NO1) der Freigabeschalter in Serie geschaltet im Befehlsweg angeordnet sind.

4. Schutzschaltungsanordnung nach Patentanspruch 2, dadurch gekennzeichnet, dass der Schliesserkontakt (z. B. K4NO) mindestens eines zweiten der Freigabeschalter in Serie mit dem Erregerorgan (z. B. K5) des ersten Freigabeschalters angeordnet ist.

5. Schutzschaltungsanordnung nach Patentanspruch 4, dadurch gekennzeichnet, dass der Schliesserkontakt (z. B. K3NO) mindestens eines dritten der Freigabeschalter in Serie mit dem Erregerorgan (z. B. K4) des zweiten Freigabeschalters angeordnet ist.

6. Schutzschaltungsanordnung nach einem der Patentansprüche 1 bis 5, dadurch gekennzeichnet, dass in der Freigabeeinheit mindesten ein Kontrollschalter vorgesehen ist, dessen Erregerorgan (z. B. KE) in Serie mit hintereinandergeschalteten Oeffnerkontakten (z. B. K1NC1, K2NC1 bzw. K1NC, K2NC) der Freigabeschalter angeordnet ist.

7. Schutzschaltungsanordnung nach Patentanspruch 6, dadurch gekennzeichnet, dass der mindestens eine Kontrollschalter mindestens einen ersten (z. B. KENO1) und mindestens einen zweiten Schliesserkontakt (z. B. KENO2) aufweist, von welchen Schliesserkontakten der erste (z. B. KENO1) in Serie mit dem Erregerorgan (z. B. K1) mindestens eines der Freigabeschalter und der zweite (z. B. KENO2) parallel zu den hintereinandergeschalteten Oeffnerkontakten (z. B. K1NC1, K2NC1) der Freigabeschalter geschaltet ist.

8. Schutzschaltungsanordnung nach Patentanspruch 7, dadurch gekennzeichnet, dass der mindestens eine Kontrollschalter einen dritten Schliesserkontakt (z. B. KENO3) aufweist, welcher im Befehlsweg zur Aktivierung eines Auslöseorgans des zu betätigenden Hochspannungsschalters (z. B. Q91) der Anlage angeordnet ist.

9. Schutzschaltungsanordnung nach einem der Patentansprüche 1 bis 8, dadurch gekennzeichnet, dass die Freigabeeinheit als Print-Vorschaltmodul ausgebildet ist.

## Claims

1. Protective circuit arrangement for a high-voltage switching system the high-voltage switches (for example Q91) of which are in each case associated with a releasing unit which can be modularised and which has position-indicating contacts which indicate the switch position of the associated high-voltage switch (for example Q91) and, after a logical combination of the indicating signals emitted by the position-indicating contacts (for example Q81NCR, Q82NCR, Q83NCR, Q0NCR) of other high-voltage switches (for example Q81, Q82, Q83, Q0) of the system enables this high-voltage switch (Q91) to be operated, characterised in that the releasing unit has releasing switches having in each case at least one excitor element (for example K1) and in each case at least one normally-open contact, which is associated with this excitor element, (for example K1NO1 or K1NO), that the at least one excitor element (for example K1) of each releasing switch can be connected to an input (for example 1) of the releasing unit at which input (for example 1) a signal, which is associated with this releasing switch, of the indicating signals to be logically combined with each other is present, and that the normally-open contacts (for example K1NO1 or K1NO) of the releasing switches are arranged in a circuit which carries out the logical combining operation.

2. Protective circuit arrangement according to Claim 1, characterised in that the normally-open contact (for example K1NO1 or K5NO) of at least a first one of the releasing switches is arranged in a command path for activating a triggering element (for example KC) of the high-voltage system switch (for example Q91) to be operated.

3. Protective circuit arrangement according to Claim 2, characterised in that the normally-open contacts (for example K1NO1) of the releasing switches are arranged in series-connected manner in the command path.

4. Protective circuit arrangement according to Claim 2, characterised in that the normally-open contact (for example K4NO) of at least a second one of the releasing switches is arranged in series with the excitor element (for example K5) of the first releasing switch.

5. Protective circuit arrangement according to Claim 4, characterised in that the normally-open contact (for example K3NO) of at least a third one of the releasing switches is arranged in series with the excitor element (for example K4) of the second releasing switch.

6. Protective circuit arrangement according to one of Claims 1 to 5, characterised in that, in the releasing unit, at least one control switch is provided, the excitor element (for example KE) of which is arranged in series with series-connected normally-closed contacts (for example K1NC1, K2NC1 or K1NC, K2NC) of the releasing switches.

7. Protective circuit arrangement according to Claim 6, characterised in that the at least one control switch has at least one first (for example KENO1) and at least one second normally-open contact (for example KENO2) of which normally-open contacts the first one (for example KENQ1) is connected in series with the excitor element (for example K1) of at least one of the releasing switches and the second one (for example KENO2) is connected in parallel with the series-connected normally-closed contacts (for example K1NC1, K2NC1) of the releasing switches.

8. Protective circuit arrangement according to Claim 7, characterised in that the at least one control switch has a third normally-open contact (for example KENO3) which is arranged in the command path for operating a trigger element of the high-voltage system switch (for example Q91) to be operated.

9. Protective circuit arrangement according to one of Claims 1 to 8, characterised in that the releasing unit is constructed as a series-type printed-circuit module.

## Revendications

1. Montage de circuit de protection pour une installation électrique à haute tension, aux interrupteurs à haute tension (par exemple Q91) de laquelle est chaque fois associée une unité de validation modularisable qui présente des contacts de signalisation de position signalant la position de commutation de l'interrupteur à haute tension (par exemple Q91) associé et qui, après une combinaison logique des signaux de signalisation émis par les contacts de signalisation de position (par exemple Q81NCR, Q82NCR, Q83NCR, Q0NCR) d'autres interrupteurs à haute tension (par exemple Q81, Q82, Q83, Q0) de l'installation, rend possible un actionnement de cet interrupteur à haute tension (Q91), caractérisé en ce que l'unité de validation comporte des interrupteurs de validation pourvus chacun d'un organe d'excitation (par exemple K1) et d'au moins un contact de fermeture (par exemple K1NO1 ou K1NO) associé à cet organe d'excitation, qu'au moins un organe d'excitation (par exemple K1) de chaque interrupteur de validation peut être connecté à une entrée (par exemple 1) de l'unité de validation, cette entrée (par exemple 1) recevant un signal associé à cet interrupteur de validation résultant des signaux de signalisation à combiner logiquement l'un à l'autre, et que les contacts de fermeture ouverts (par exemple K1NO1 et K1NO) des interrupteurs de validation sont disposés dans un circuit assurant la combinaison logique.

2. Montage de circuit de protection suivant la revendication 1, caractérisé en ce que le contact de fermeture (par exemple K1NO1 et K5NO) d'au moins un premier interrupteur de validation est monté dans un trajet de commande en vue de l'activation d'un organe de déclenchement (par exemple KC) de l'interrupteur à haute tension (par exemple Q91) à actionner de l'installation.

3. Montage de circuit de protection suivant la revendication 2, caractérisé en ce que les contacts de fermeture (par exemple K1NO1) des interrupteurs de validation sont connectés en série dans le trajet de commande.

4. Montage de circuit de protection suivant la revendication 2, caractérisé en ce que le contact de fermeture (par exemple K4NO) d'au moins un deuxième interrupteur de validation est disposé en série avec l'organe d'excitation (par exemple K5) du premier interrupteur de validation.

5. Montage de circuit de protection suivant la revendication 4, caractérisé en ce que le contact de fermeture (par exemple K3NO) d'au moins un troisième interrupteur de validation est disposé en série avec l'organe d'excitation (par exemple K4) du deuxième interrupteur de validation.

6. Montage de circuit de protection suivant l'une quelconque des revendications 1 à 5, caractérisé en ce que, dans l'unité de validation, est prévu au moins un interrupteur de contrôle dont l'organe d'excitation (par exemple KE) est disposé en série avec des contacts d'ouverture connectés l'un à la suite de l'autre (par exemple K1NC1, K2NC1 et K1NC, K2NC) des interrupteurs de validation.

7. Montage de circuit de protection suivant la revendication 6, caractérisé en ce que ledit au moins un interrupteur de contrôle comporte au moins un premier (par exemple KENO1) et au moins un deuxième (KENO2) contact de fermeture, dont le premier (par exemple KENO1) est en série avec l'organe d'excitation (par exemple K1) d'au moins un des interrupteurs de validation et le deuxième (par exemple KENO2) est parallèle avec les contacts d'ouverture connectés l'un à la suite de l'autre (par exemple K1NC1, K2NC1) des interrupteurs de validation.

8. Montage de circuit de protection suivant la revendication 7, caractérisé en ce que ledit au moins un interrupteur de contrôle comporte un troisième contact de fermeture (par exemple KENO3) qui est disposé dans le trajet de commande en vue de l'activation d'un organe de déclenchement de l'interrupteur à haute tension (par exemple Q91) à actionner de l'installation.

9. Montage de circuit de protection suivant l'une quelconque des revendications 1 à 8, caractérisé en ce que l'unité de validation a la forme d'un module additionnel imprimé.

FIG.1

FIG.2

FIG.3

0 108 293

FIG.1

FIG.2

1

FIG.3

Fig. 4

0 108 293